# EUROPEAN PATENT APPLICATION

(11) **EP 4 160 107 A1**
(43) Date of publication of application: **05.04.2023**
(21) Application number: 20937397.6
(22) Date of filing: 28.05.2020
(51) Int. Cl.: F25B 1/00, F24F 5/00, F24F 11/84, F24F 110/12, F24F 140/20

(54) **REFRIGERATION CYCLE DEVICE**

(71) Applicant: MITSUBISHI ELECTRIC CORPORATION, Chiyoda-ku Tokyo 100-8310 (JP)
(72) Inventor: HORIE, Hayato, Tokyo 100-8310 (JP); HAMADA, Mamoru, Tokyo 100-8310 (JP)
(74) Representative: Studio Torta S.p.A.
(86) International application number: PCT/JP2020/021141
(87) International publication number: WO 2021/240729

(57) **Abstract**

A refrigeration cycle apparatus provided with: a compressor to compress refrigerant; a first heat exchanger to cool the refrigerant compressed by the compressor with outdoor air; a decompressor to reduce a pressure of the refrigerant; a second heat exchanger to cool a heat medium with the refrigerant decompressed by the decompressor; a third heat exchanger to cool the heat medium with the outdoor air; a first heat medium passage connecting a heat medium outlet of the third heat exchanger to a heat medium inlet of the second heat exchanger; a first bypass valve to allow the heat medium to flow from the first heat medium passage into a first load device; a second heat medium passage to allow the heat medium flowing out of the second heat exchanger to flow into a second load device; a second bypass valve to allow the heat medium flowing out of the second heat exchanger to flow into the first load device; a return passage through which the heat medium returning from the first load device and the heat medium returning from the second load device pass; a flow path switching valve to switch between a first mode in which the heat medium flows into the first heat medium passage from the return passage without passing through the third heat exchanger and a second mode in which the heat medium flows into the third heat exchanger from the return passage.

## Description

### Field

The present disclosure relates to a refrigeration cycle apparatus.

### Background

PTL 1 below discloses an air-conditioning operation method using free cooling. In this air-conditioning operation method, a low-temperature cold water tank and a high-temperature cold water tank are provided, and in an intermediate period, low-temperature cold water produced by a refrigerator is supplied to the low-temperature cold water tank for latent heat treatment, and high-temperature cold water produced by a cooling tower is supplied to the high-temperature cold water tank for sensible heat treatment. In summer or winter, high-temperature cold water in the high-temperature cold water tank is produced using low-temperature cold water produced by the refrigerator or low-temperature cold water produced by the cooling tower.

### Citation List

### Patent Literature

[PTL 1] JP 5503461 A

### Summary

### Technical Problem

The conventional technology described above requires two water tanks and requires two pumps for supplying water between each water tank and a load, which causes a problem of high cost.

An object of present disclosure, which has been made in order to solve the above problem, is to provide a refrigeration cycle apparatus that has a simple structure and is advantageous in increasing opportunities to utilize free cooling.

### Solution to Problem

A refrigeration cycle apparatus according to the present invention includes: a compressor to compress refrigerant; a first heat exchanger to cool the refrigerant compressed by the compressor with outdoor air; a decompressor to reduce a pressure of the refrigerant; a second heat exchanger to cool a heat medium with the refrigerant decompressed by the decompressor; a third heat exchanger to cool the heat medium with the outdoor air; a first heat medium passage connecting a heat medium outlet of the third heat exchanger to a heat medium inlet of the second heat exchanger; a first bypass valve to allow the heat medium to flow from the first heat medium passage into a first load device; a second heat medium passage to allow the heat medium flowing out of the second heat exchanger to flow into a second load device; a second bypass valve to allow the heat medium flowing out of the second heat exchanger to flow into the first load device; a return passage through which the heat medium returning from the first load device and the heat medium returning from the second load device pass; and a flow path switching valve to switch between a first mode in which the heat medium flows into the first heat medium passage from the return passage without passing through the third heat exchanger and a second mode in which the heat medium flows into the third heat exchanger from the return passage.

### Advantageous Effects of Invention

According to the present disclosure, it is possible to provide a refrigeration cycle apparatus that has a simple structure and is advantageous in increasing opportunities to utilize free cooling.

### Brief Description of Drawings

Fig. 1 is a diagram illustrating a refrigeration cycle apparatus according to a first embodiment.
Fig. 2 is a diagram illustrating a state in which the refrigeration cycle apparatus is being operated in a free-cooling combined operation mode.
Fig. 3 is a diagram illustrating a refrigeration cycle apparatus according to a second embodiment.
Fig. 4 is a diagram illustrating a refrigeration cycle apparatus according to a third embodiment.

### Description of Embodiments

Embodiments will be described below with reference to the drawings. In the drawings, common or corresponding elements are denoted by the same reference numerals, and the description thereof is simplified or omitted. In the present disclosure, the outside of a building is referred to as "outdoor", the inside of a room of the building is referred to as "indoor", the air outside the building is referred to as "outdoor air", and the air inside the room of the building is referred to as "indoor air". The temperature of the outdoor air is referred to as an "outside air temperature".

### First Embodiment

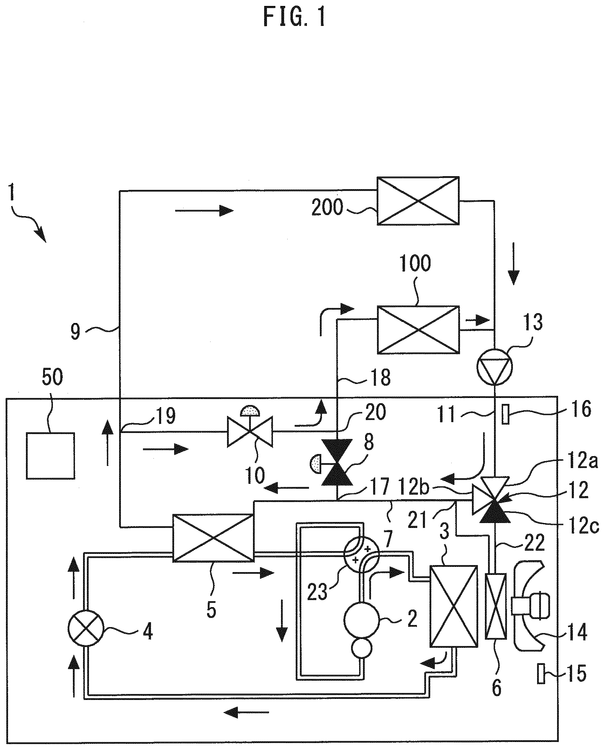

Fig. 1 is a diagram illustrating a refrigeration cycle apparatus 1 according to a first embodiment. As illustrated in Fig. 1, a refrigeration cycle apparatus 1 is provided with: a compressor 2 configured to compress refrigerant; a first heat exchanger 3 configured to cool the refrigerant compressed by the compressor 2 with outdoor air; a decompressor 4 configured to reduce a pressure of the refrigerant; a second heat exchanger 5 configured to cool a heat medium with the refrigerant decompressed by the decompressor 4; a third heat exchanger 6 configured to cool the heat medium with the outdoor air; a first heat medium passage 7 connecting a heat medium outlet of the third heat exchanger 6 to a heat medium inlet of the second heat exchanger 5; a first bypass valve 8 configured to allow the heat medium to flow from the first heat medium passage 7 into a first load device 100; a second heat medium passage 9 configured to allow the heat medium flowing out of the second heat exchanger 5 to flow into a second load device 200; a second bypass valve 10 configured to allow the heat medium flowing out of the second heat exchanger 5 to flow into the first load device 100; a return passage 11 through which the heat medium returning from the first load device 100 and the heat medium returning from the second load device 200 pass; a flow path switching valve 12 configured to switch between a first mode in which the heat medium flows into the first heat medium passage 7 from the return passage 11 without passing through the third heat exchanger 6 and a second mode in which the heat medium flows into the third heat exchanger 6 from the return passage 11.

A substance used as the refrigerant in the present disclosure is not particularly limited but may be, for example, any of CO2, HFC, HFO, and hydrocarbon.

A substance used as the heat medium in the present disclosure is typically liquid water. However, a liquid except for water, such as an aqueous solution of calcium chloride, an aqueous solution of ethylene glycol, an aqueous solution of propylene glycol, or alcohol, may be used as the heat medium. In the illustrated example, a heat medium pump 13 for circulating the heat medium is provided in the return passage 11.

The first heat exchanger 3 is configured to cool the heat medium by heat exchange using outdoor air. For example, the first heat exchanger 3 may be configured to directly exchange heat between the outdoor air and the heat medium in a closed type cooling tower. Alternatively, the first heat exchanger 3 may be configured to exchange heat between cooling water cooled by outdoor air in an open type cooling tower and the heat medium.

The third heat exchanger 6 is configured to cool the heat medium by heat exchange using outdoor air. For example, the third heat exchanger 6 may be configured to directly exchange heat between the outdoor air and the heat medium in the closed type cooling tower. Alternatively, the third heat exchanger 6 may be configured to exchange heat between the cooling water cooled by outdoor air in the open type cooling tower and the heat medium.

In the illustrated example, the first heat exchanger 3 and the third heat exchanger 6 are disposed adjacent to each other. In the illustrated example, a blower 14 for feeding outdoor air to the first heat exchanger 3 and the third heat exchanger 6 is provided. The blower 14 may not be provided. In place of the illustrated example, the third heat exchanger 6 may be disposed at a position away from the first heat exchanger 3. In this case, a blower for feeding outdoor air to the first heat exchanger 3 and a blower for feeding outdoor air to the third heat exchanger 6 may be provided separately.

In the present embodiment, an example will be mainly described where the first load device 100 and the second load device 200 are configured to perform air conditioning in a room by using a heat medium. However, the present disclosure is not limited to a system for performing air conditioning. For example, one or both of the first load device 100 and the second load device 200 may be configured to cool a production apparatus by using a heat medium.

The first load device 100 may include a heat exchanger for exchanging heat between the indoor air and the heat medium. The first load device 100 may be formed of, for example, a fan coil unit. The first load device 100 may be configured to mainly handle a sensible heat load in air conditioning. That is, the first load device 100 may be configured to mainly lower the temperature of the indoor air.

The air flowing into the room from outside is hereinafter referred to as "ventilation air". The second load device 200 may include a heat exchanger for exchanging heat between the ventilation air and the heat medium. The second load device 200 may be formed of what is generally called an outside air processing air conditioner. The second load device 200 may be configured to mainly handle latent heat load in air conditioning. That is, in order to reduce humidity, the second load device 200 may be configured to mainly cool air to condense water vapor.

### <Chiller independent operation mode>

Fig. 1 illustrates a state in which the refrigeration cycle apparatus 1 is being operated in a chiller independent operation mode. In the chiller independent operation mode, the heat medium is cooled by operating the compressor 2 without performing free cooling by the third heat exchanger 6. The refrigeration cycle apparatus 1 in the chiller independent operation mode operates as follows. The high-temperature and high-pressure refrigerant compressed by the compressor 2 flows into the first heat exchanger 3. The refrigerant cooled by the outdoor air in the first heat exchanger 3 is decompressed when passing through the decompressor 4. The first bypass valve 8 is closed. The second bypass valve 10 is open. The flow path switching valve 12 is in the first mode. In the second heat exchanger 5, the heat medium is cooled by exchanging heat between the low-temperature and low-pressure refrigerant flowing out of the decompressor 4 and the heat medium. A part of the heat medium flowing out of the second heat exchanger 5 is supplied to the first load device 100 through the second bypass valve 10. The remainder of the heat medium flowing out of the second heat exchanger 5 is supplied to the second load device 200 through the second heat medium passage 9. The heat medium returned from the first load device 100 and the heat medium returned from the second load device 200 merge and flow through the return passage 11. The heat medium flows from the return passage 11 into the first heat medium passage 7 without passing through the third heat exchanger 6. The entire amount of the heat medium flowing into the first heat medium passage 7 flows into the second heat exchanger 5.

### <Free-cooling combined operation mode>

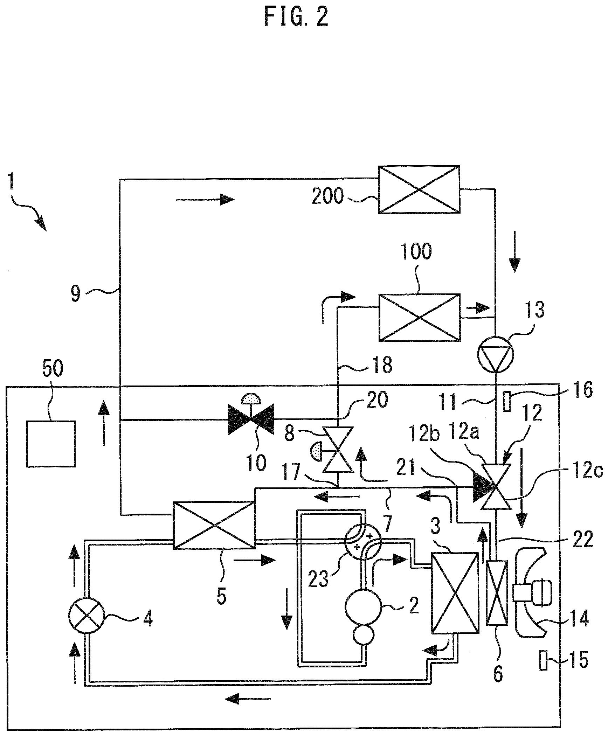

Fig. 2 is a diagram illustrating a state in which the refrigeration cycle apparatus 1 is being operated in the free-cooling combined operation mode. In the free-cooling combined operation mode, free cooling by the third heat exchanger 6 and the operation of the compressor 2 are used in combination to cool the heat medium. The refrigeration cycle apparatus 1 in the free-cooling combined operation mode operates as follows. The refrigerant circulates through the same path as in the chiller independent operation mode. The first bypass valve 8 is open. The second bypass valve 10 is closed. The flow path switching valve 12 is in the second mode. The heat medium returned from the first load device 100 and the heat medium returned from the second load device 200 merge and flow through the return passage 11. The heat medium having passed through the return passage 11 flows into the third heat exchanger 6. The heat medium cooled by the outdoor air in the third heat exchanger 6 flows into the first heat medium passage 7. A part of the heat medium flowing through the first heat medium passage 7 is supplied to the first load device 100 through the first bypass valve 8. The remainder of the heat medium flowing through the first heat medium passage 7 flows into the second heat exchanger 5. The heat medium cooled by the refrigerant in the second heat exchanger 5 is supplied to the second load device 200 through the second heat medium passage 9.

In order to treat the latent heat by the second load device 200, the temperature of the heat medium flowing from the second heat exchanger 5 into the second load device 200 needs to be made lower than the dew point temperature. The greater the flow rate of the heat medium flowing through the second heat exchanger 5, the greater the power consumption of the compressor 2 when the heat medium is cooled to an isothermal temperature. The flow rate of the heat medium flowing through the second heat exchanger 5 in the free-cooling combined operation mode is smaller than that in the chiller independent operation mode. Therefore, in the free-cooling combined operation mode, the power consumption of the compressor 2 can be reduced as compared with the chiller independent operation mode, and energy saving can be achieved.

In the free-cooling combined operation mode, the heat medium cooled by the free cooling of the third heat exchanger 6 flows into the first load device 100. The temperature of the heat medium cooled by free cooling varies in accordance with the outside air temperature. The temperature of the heat medium flowing into the first load device 100, which treats sensible heat, can be higher than the dew point temperature. In the free-cooling combined operation mode, the heat medium cooled by free cooling can be supplied to the first load device 100, and the heat medium further cooled by the second heat exchanger 5 to a temperature lower than the dew point temperature can be supplied to the second load device 200. Therefore, in the refrigeration cycle apparatus 1 of the present embodiment, free cooling can be utilized even when the temperature of the heat medium cooled by free cooling is higher than the dew point temperature. As a result, opportunities to utilize free cooling can be increased, and energy saving can thus be achieved. Further, according to the present embodiment, since the above effect can be achieved by the refrigeration cycle apparatus 1 having a simple configuration, the product cost can be reduced. For example, the simple configuration can be achieved by not requiring a tank that separately stores the heat medium cooled by free cooling and the heat medium further cooled by the second heat exchanger 5. Moreover, the simple configuration can be achieved by the common heat medium pump 13 circulating both the heat medium cooled by free cooling and the heat medium further cooled by the second heat exchanger 5.

In the free-cooling combined operation mode, the second bypass valve 10 may be slightly opened. Thereby, the heat medium having passed through the second bypass valve 10 mixes with the heat medium passing through the first bypass valve 8, so that the temperature of the heat medium flowing into the first load device 100 can be lowered.

The refrigeration cycle apparatus 1 may further include control circuitry 50 configured to control the operation of the first bypass valve 8, the operation of the second bypass valve 10, and the operation of the flow path switching valve 12. The addition of the control circuitry 50 has an advantage that these operations can be automated.

The control circuitry 50 may be configured to close the first bypass valve 8 and open the second bypass valve 10 when the flow path switching valve 12 is in the first mode. This can automate the operation of the chiller independent operation mode.

The control circuitry 50 may be configured to perform a process of opening the first bypass valve 8 and a process of closing the second bypass valve 10 when the flow path switching valve 12 is in the second mode. The control circuitry 50 may be configured to perform, when the flow path switching valve 12 is in the second mode, a process of opening the first bypass valve 8 and a process of making the opening degree of the second bypass valve 10 smaller than the opening degree when the flow path switching valve 12 is in the first mode. These can automate the operation of the free-cooling combined operation mode.

### <Free-cooling independent operation mode>

Although not illustrated, the refrigeration cycle apparatus 1 may be operated in a free-cooling independent operation mode in which the heat medium is cooled only by free cooling without operating the compressor 2. In the free-cooling independent operation mode, the compressor 2 is stopped, the flow path switching valve 12 is set to the second mode, the first bypass valve 8 is opened, and the second bypass valve 10 is fully closed.

The control circuitry 50 may be configured to vary the operating speed of the compressor 2 by, for example, inverter control to adjust the capability of cooling the heat medium. The control circuitry 50 may be configured to further control at least one of the operation of the decompressor 4, the operation of the heat medium pump 13, and the operation of the blower 14. The decompressor 4 may be an expansion valve with an adjustable opening degree. The control circuitry 50 may be configured to vary the operating speed of the heat medium pump 13 by, for example, inverter control, thus adjusting the circulating flow rate of the heat medium. The control circuitry 50 may be configured to vary the operating speed of the blower 14 by, for example, inverter control, thus adjusting the air flow rate. The control circuitry 50 may control at least one of the operating speed of the compressor 2, the circulating flow rate of the heat medium, the opening degree of the decompressor 4, and the operating speed of the blower 14 so that each of the first load device 100 and the second load device 200 satisfies the required capability.

In the following description, the temperature of the heat medium passing through the return passage 11 is referred to as a "return temperature". The refrigeration cycle apparatus 1 may further include an outside air temperature sensor 15 for detecting the outside air temperature and a return temperature sensor 16 for detecting the return temperature. The control circuitry 50 may switch the flow path switching valve 12 from the first mode to the second mode when the outside air temperature is lower than the return temperature, and the difference between the return temperature and the outside air temperature is larger than a reference. That is, the control circuitry 50 may be configured to shift from the chiller independent operation mode to the free-cooling combined operation mode when the outside air temperature is lower than the return temperature, and the difference between the return temperature and the outside air temperature is larger than the above reference. This increases the opportunity to use the free-cooling combined operation mode instead of the chiller independent operation mode, thereby saving energy.

In the following description, the cooling capability of the heat medium supplied by the refrigeration cycle apparatus 1 to the first load device 100 and the second load device 200 is referred to as a "supplied cooling capability". The refrigeration cycle apparatus 1 may further include a capability shortage detector for detecting the shortage of the supplied cooling capability. The control circuitry 50 may have the function of the capability shortage detector. For example, the capability shortage detector may determine whether the supplied cooling capability is sufficient for the sensible heat capability, which is the cooling capability required by the first load device 100, and the latent heat capability, which is the cooling capability required by the second load device 200. The capability shortage detector may detect the shortage of the supplied cooling capability based on information obtained from an indoor sensor (not illustrated) that detects the temperature and humidity of the indoor air. For example, the capability shortage detector may detect the shortage of the supplied cooling capability based on the difference between an actual indoor temperature and a target value and the difference between an actual indoor humidity and a target value.

When the supplied cooling capability becomes insufficient while with the flow path switching valve 12 is in the second mode, the control circuitry 50 may reduce the opening degree of the first bypass valve 8 and increase the opening degree of the second bypass valve 10. That is, the control circuitry 50 may be configured to lower the opening degree of the first bypass valve 8 and to increase the opening degree of the second bypass valve 10 when the supplied cooling capability becomes insufficient during the execution of the free-cooling combined operation mode. When the opening degree of the first bypass valve 8 decreases and that of the second bypass valve 10 increases, the flow rate of the heat medium flowing into the second heat exchanger 5 and cooled by the refrigerant increases, so that the supplied cooling capability increases. As a result, the shortage of supplied cooling capability is solved.

Further, during the execution of the free-cooling combined operation mode, the control circuitry 50 may shift to the free-cooling independent operation mode in response to the difference between the return temperature and the outside air temperature. Alternatively, during the execution of the free-cooling combined operation mode, the control circuitry 50 may shift to the free-cooling independent operation mode in response to the fact that the supplied cooling capability is sufficient.

The refrigeration cycle apparatus 1 of the present embodiment will be further described below. The inlet of the first bypass valve 8 is connected to a branch portion 17 provided in the first heat medium passage 7. The outlet of the first bypass valve 8 is connected to the heat medium inlet of the first load device 100 by a heat medium passage 18. The second heat medium passage 9 connects the heat medium outlet of the second heat exchanger 5 to the heat medium inlet of the second load device 200. The inlet of the second bypass valve 10 is connected to a branch portion 19 provided in the second heat medium passage 9. The outlet of the second bypass valve 10 is connected to a branch portion 20 provided in the heat medium passage 18.

The upstream portion of the return passage 11 is connected to both the heat medium outlet of the first load device 100 and the heat medium outlet of the second load device 200. The flow path switching valve 12 corresponds to a three-way valve having an inlet 12a, a first outlet 12b, and a second outlet 12c. The inlet 12a is connected to the downstream portion of the return passage 11. The first outlet 12b is connected to a branch portion 21 provided in the first heat medium passage 7. The second outlet 12c is connected to the heat medium inlet of the third heat exchanger 6 by a heat medium passage 22. In the first mode, the flow path switching valve 12 communicates the inlet 12a with the first outlet 12b and closes the second outlet 12c. In the second mode, the flow path switching valve 12 communicates the inlet 12a with the second outlet 12c and closes the first outlet 12b.

The refrigeration cycle apparatus 1 of the illustrated example further includes a refrigerant circuit switching valve 23 for switching between a normal cycle circuit and a reverse cycle circuit. As illustrated in Figs. 1 and 2, the normal cycle circuit is a circuit in which high-temperature and high-pressure refrigerant discharged from the compressor 2 flows into the first heat exchanger 3 through the refrigerant circuit switching valve 23. Although not illustrated, the reverse cycle circuit is a circuit in which high-temperature and high-pressure refrigerant discharged from the compressor 2 flows into the second heat exchanger 5 through the refrigerant circuit switching valve 23. By adding the refrigerant circuit switching valve 23, the refrigeration cycle apparatus 1 can perform a heating operation using the reverse cycle circuit. In the heating operation, the heat medium is heated by the high-temperature and high-pressure refrigerant in the second heat exchanger 5. For example, by supplying the heat medium heated by the heating operation to the first load device 100 and the second load device 200, the inside of the room can be heated. In the heating operation, the high-pressure refrigerant that has passed through the second heat exchanger 5 is decompressed by the decompressor 4. The decompressed refrigerant absorbs the heat of the outdoor air in the first heat exchanger 3 and is evaporated. The evaporated refrigerant is sucked into the compressor 2. However, the refrigeration cycle apparatus 1 of the present disclosure may not include the refrigerant circuit switching valve 23, that is, may not perform the heating operation using the reverse cycle circuit.

Each function of the control circuitry 50 may be achieved by a processing circuit. The processing circuit of the control circuitry 50 may include at least one processor and at least one memory. At least one processor may read and execute a program stored in at least one memory to implement each function of the control circuitry 50. The processing circuit of the control circuitry 50 may include at least one dedicated hardware.

### Second Embodiment

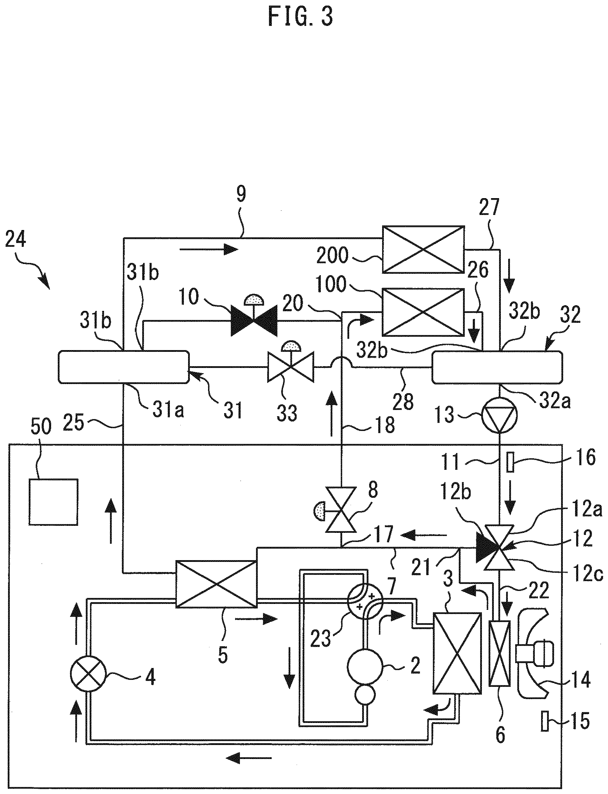

Next, a second embodiment will be described with reference to Fig. 3, focusing on the differences from the first embodiment described above, and elements common to or corresponding to the elements described above are denoted by the same reference numerals to simplify or omit the common description.

Fig. 3 is a diagram illustrating a refrigeration cycle apparatus 24 according to the second embodiment. As illustrated in Fig. 3, the refrigeration cycle apparatus 24 according to the second embodiment further includes a forward header 31, a return header 32, and an inter-header bypass valve 33. The forward header 31 has a predetermined volume. The return header 32 has a predetermined volume. Fig. 3 illustrates a state in the free-cooling combined operation mode.

The forward header 31 includes an inlet 31a and a plurality of outlets 31b. The inlet 31a is connected to the heat medium outlet of the second heat exchanger 5 by a heat medium passage 25. The second heat medium passage 9 connects one of the plurality of outlets 31b to the heat medium inlet of the second load device 200. The inlet of the second bypass valve 10 is connected to another one of the plurality of outlets 31b.

The return header 32 includes an outlet 32a and a plurality of inlets 32b. The upstream portion of the return passage 11 is connected to the outlet 32a. One of the plurality of inlets 32b is connected to the heat medium outlet of the first load device 100 by a heat medium passage 26. Another one of the plurality of inlets 32b is connected to the heat medium outlet of the second load device 200 by a heat medium passage 27.

The inter-header bypass passage 28 connects the forward header 31 to the return header 32. The inter-header bypass passage 28 is provided with an inter-header bypass valve 33. When the inter-header bypass valve 33 is opened, the heat medium can move between the forward header 31 and the return header 32 through the inter-header bypass passage 28.

In the following description, the difference between the pressure of the heat medium in the forward header 31 and that in the return header 32 will be referred to as an "inter-header pressure difference". According to the present embodiment, the inter-header pressure difference can be adjusted by changing the opening degree of the inter-header bypass valve 33. By adjusting the inter-header pressure difference, it can be more reliably ensured that the flow rate of the heat medium supplied to the first load device 100 and the flow rate of the heat medium supplied to the second load device 200 are appropriate values. In particular, even when the distance to the first load device 100 or the distance to the second load device 200 is long, it is possible to reliably supply the heat medium at an appropriate flow rate.

The control circuitry 50 may be configured to control the operation of the inter-header bypass valve 33 so that the inter-header pressure difference detected by a sensor (not illustrated) matches a target.

### Third Embodiment

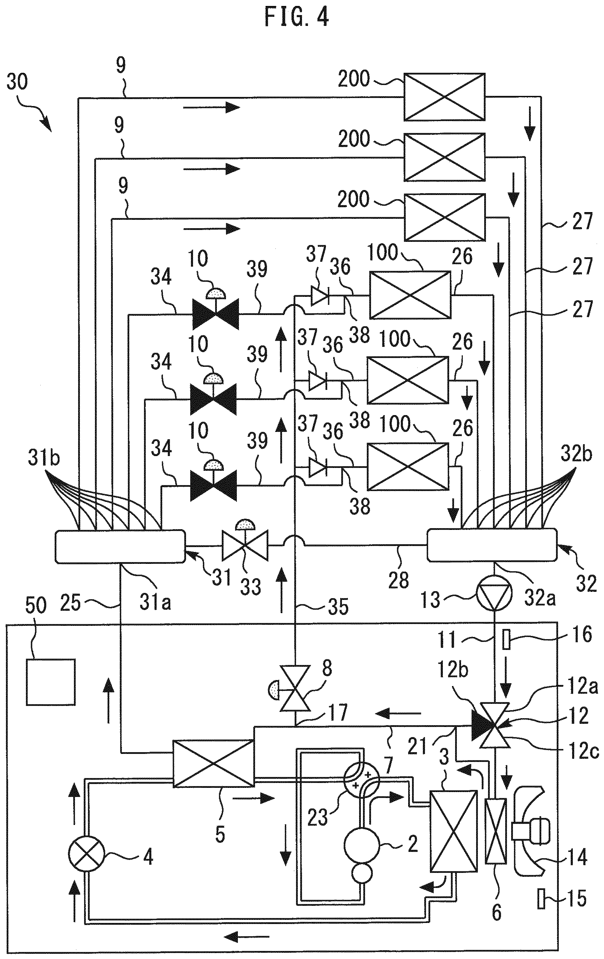

Next, a third embodiment will be described with reference to Fig. 4, focusing on the differences from the first embodiment and the second embodiment described above, and elements common to or corresponding to the elements described above are denoted by the same reference numerals to simplify or omit the common description.

Fig. 4 illustrates a refrigeration cycle apparatus 30 according to the third embodiment. As illustrated in Fig. 4, the refrigeration cycle apparatus 30 according to the third embodiment further includes a forward header 31, a return header 32, and an inter-header bypass valve 33. Further, a plurality of first load devices 100 and a plurality of second load devices 200 are connected to the forward header 31 and the return header 32. The refrigeration cycle apparatus 30 is provided with a plurality of second bypass valves 10 corresponding to the plurality of first load devices 100. Fig. 4 illustrates a state in the free-cooling combined operation mode.

The heat medium inlet of each second load device 200 is connected by the second heat medium passage 9 to one outlet 31b corresponding to the second load device 200 among the plurality of outlets 31b of the forward header 31. The inlet of each second bypass valve 10 is connected by a heat medium passage 34 to one outlet 31b corresponding to the second bypass valve 10 among the plurality of outlets 31b of the forward header 31.

An upstream portion of a heat medium passage 35 is connected to the outlet of the first bypass valve 8. The downstream portion of the heat medium passage 35 has a plurality of branch pipes 36 corresponding to the plurality of first load devices 100. Each branch pipe 36 is connected to the heat medium inlet of one first load device 100 corresponding to the branch pipe 36 among the plurality of first load devices 100. Each branch pipe 36 is provided with a check valve 37 and a branch portion 38. The branch portion 38 is provided in the branch pipe 36 between the check valve 37 and the first load device 100. The outlet of each second bypass valve 10 is connected by a heat medium passage 39 to the branch portion 38 of the branch pipe 36 connected to one first load device 100 corresponding to the second bypass valve 10 among the plurality of first load devices 100.

When one of the second bypass valves 10 is opened, the heat medium flowing out of the second heat exchanger 5 to the forward header 31 flows into one first load device 100 corresponding to the second bypass valve 10 among the plurality of first load devices 100. At this time, the check valve 37 prevents the heat medium from flowing into the other first load device 100.

The system may be configured such that the number of first load devices 100 to be operated among the plurality of first load devices 100 can be changed. For example, the number of first load devices 100 to be operated may be changed by closing a valve (not illustrated) provided in each heat medium passage 26 or each branch pipe 36 and stopping the supply of the heat medium to the first load device 100 the operation of which is to be stopped. Alternatively, the number of first load devices 100 to be operated may be changed by providing a bypass passage (not illustrated) that bypasses each of the first load devices 100 and allowing the heat medium to flow so as to bypass the first load device 100 the operation of which is to be stopped.

The system may be configured such that the number of second load devices 200 to be operated among the plurality of second load devices 200 can be changed. For example, the number of second load devices 200 to be operated may be changed by closing a valve (not illustrated) provided in each second heat medium passage 9 or each heat medium passage 27 and stopping the supply of the heat medium to the second load device 200 the operation of which is to be stopped. Alternatively, the number of second load devices 200 to be operated may be changed by providing a bypass passage (not illustrated) that bypasses each of the second load devices 200 and allowing the heat medium to flow so as to bypass the second load device 200 the operation of which is to be stopped.

According to the present embodiment, by using the inter-header bypass valve 33 to adjust the inter-header pressure difference, it can be more reliably ensured that the flow rate of the heat medium supplied to each of the first load devices 100 and the flow rate of the heat medium supplied to each of the second load devices 200 become appropriate values. In particular, even when the number of first load devices 100 to be operated or the number of second load devices 200 to be operated changes, it is possible to reliably supply the heat medium at an appropriate flow rate.

In the present embodiment, since the plurality of second bypass valves 10 corresponding to the plurality of first load devices 100 are provided, the amount of heat medium flowing into the first load device 100 from the second heat exchanger 5 can be individually adjusted in the free-cooling combined operation mode. For example, by opening only the second bypass valve 10 corresponding to the first load device 100 having insufficient cooling capability among the plurality of second bypass valves 10, it is possible to supply the heat medium from the second heat exchanger 5 only to the first load device 100 having an insufficient cooling capability.

### Reference Signs List

- 1: refrigeration cycle apparatus
- 2: compressor
- 3: first heat exchanger
- 4: decompressor
- 5: second heat exchanger
- 6: third heat exchanger
- 7: first heat medium passage
- 8: first bypass valve
- 9: second heat medium passage
- 10: second bypass valve
- 11: return passage
- 12: flow path switching valve
- 12a: inlet
- 12b: first outlet
- 12c: second outlet
- 13: heat medium pump
- 14: blower
- 15: outside air temperature sensor
- 16: return temperature sensor
- 17: branch portion
- 18: heat medium passage
- 19: branch portion
- 20: branch portion
- 21: branch portion
- 22: heat medium passage
- 23: refrigerant circuit switching valve
- 24: refrigeration cycle apparatus
- 25: heat medium passage
- 26: heat medium passage
- 27: heat medium passage
- 28: inter-header bypass passage
- 30: refrigeration cycle apparatus
- 31: forward header
- 31a: inlet
- 31b: outlet
- 32: return header
- 32a: outlet
- 32b: inlet
- 33: inter-header bypass valve
- 34: heat medium passage
- 35: heat medium passage
- 36: branch pipe
- 37: check valve
- 38: branch portion
- 39: heat medium passage
- 50: control circuitry
- 100: first load device
- 200: second load device

## Claims

1. A refrigeration cycle apparatus comprising:
a compressor to compress refrigerant;
a first heat exchanger to cool the refrigerant compressed by the compressor with outdoor air;
a decompressor to reduce a pressure of the refrigerant;
a second heat exchanger to cool a heat medium with the refrigerant decompressed by the decompressor;
a third heat exchanger to cool the heat medium with the outdoor air;
a first heat medium passage connecting a heat medium outlet of the third heat exchanger to a heat medium inlet of the second heat exchanger;
a first bypass valve to allow the heat medium to flow from the first heat medium passage into a first load device;
a second heat medium passage to allow the heat medium flowing out of the second heat exchanger to flow into a second load device;
a second bypass valve to allow the heat medium flowing out of the second heat exchanger to flow into the first load device;
a return passage through which the heat medium returning from the first load device and the heat medium returning from the second load device pass; and
a flow path switching valve to switch between a first mode in which the heat medium flows into the first heat medium passage from the return passage without passing through the third heat exchanger and a second mode in which the heat medium flows into the third heat exchanger from the return passage.

2. The refrigeration cycle apparatus according to claim 1, further comprising control circuitry to control an operation of the first bypass valve, an operation of the second bypass valve, and an operation of the flow path switching valve.

3. The refrigeration cycle apparatus according to claim 2, further comprising:
an outside air temperature sensor to detect an outside air temperature that is a temperature of the outdoor air; and
a return temperature sensor to detect a return temperature that is a temperature of the heat medium passing through the return passage,
wherein the control circuitry is configured to switch the flow path switching valve to the second mode when the outside air temperature is lower than the return temperature, and a difference between the return temperature and the outside air temperature is larger than a reference.

4. The refrigeration cycle apparatus according to claim 2 or 3, wherein
the control circuitry is configured to close the first bypass valve and open the second bypass valve when the flow path switching valve is in the first mode, and
the control circuitry is configured to perform, when the flow path switching valve is in the second mode, a process of opening the first bypass valve and a process of closing the second bypass valve or making an opening degree of the second bypass valve smaller than the opening degree in the first mode.

5. The refrigeration cycle apparatus according to any one of claims 2 to 4, further comprising
a capability shortage detector to detect a shortage of a supplied cooling capability that is a cooling capability of the heat medium supplied to the first load device and the second load device,
wherein the control circuitry is configured to decrease an opening degree of the first bypass valve and increase the opening degree of the second bypass valve when the supplied cooling capability becomes insufficient while the flow path switching valve is in the second mode.

6. The refrigeration cycle apparatus according to any one of claims 1 to 5, further comprising:
the first load device including a heat exchanger for exchanging heat between indoor air and the heat medium; and
the second load device including a heat exchanger for exchanging heat between ventilation air flowing from outdoor to indoor and the heat medium.

7. The refrigeration cycle apparatus according to any one of claims 1 to 6, further comprising:
a forward header connected to each of a heat medium outlet of the second heat exchanger, the second bypass valve, and the second heat medium passage;
a return header connected to each of the return passage, the first load device, and the second load device;
an inter-header bypass passage connecting the forward header to the return header; and
an inter-header bypass valve provided in the inter-header bypass passage.
